# EUROPEAN PATENT APPLICATION

(11) **EP 2 378 784 A1**
(43) Date of publication of application: **19.10.2011**
(21) Application number: 11160525.9
(22) Date of filing: 30.03.2011
(51) Int. Cl.: H04N 13/00

(54) **Three dimensional (3D) glasses, 3D display apparatus and system for charging 3D glasses**

(30) Priority: 14.04.2010 KR 20100034309
(71) Applicant: Samsung Electronics Co., Ltd., Gyeonggi-do (KR)
(72) Inventor: Lee, Myoung-jun, Gyeonggi-do (KR); Choi, Sung-jin, Gyeonggi-do (KR)
(74) Representative: Bruce, Alexander Richard Henry

(57) **Abstract**

Three dimensional (3D) glasses, a 3D display apparatus, and a 3D glasses charging system are provided. The 3D glasses, which operate in association with a 3D display apparatus, includes an interface unit which is configured to connect to the 3D display apparatus, and through which power is transmittable; a battery unit which supplies power to the 3D glasses; and a charging unit which is connected to the interface unit and the battery unit, and receives power input from the interface unit and charges the battery unit using the input power.

## Description

The present invention relates to three-dimensional (3D) glasses implementing a manner of displaying left-eye images and right-eye images alternately, a 3D display apparatus and a system for charging the 3D glasses.

3D image technology has been applied in various fields such as communications, broadcasting, medical services, education, military, computer games, computer animation, virtual reality, computer-aided design (CAD), industrial technology, and the like. For all of the above areas, 3D image technology is a key enabling technology of the next generation 3D multimedia telecommunications.

A person perceives a stereoscopic sense due to related effects, including changes in the thickness of a person's lens depending on a position of an object being viewed, the difference in the angle of the object as perceived by the left eye and the right eye, changes in position and form of the object as perceived by the left eye and the right eye, disparity caused by object movement, and various other psychological and memory effects.

The binocular disparity, caused by an approximate 6 to 7 centimeter lateral distance between a person's left and right eyes, is one of the most influential causes of the stereoscopic sense. Due to binocular disparity, a person perceives an object at different angles, causing the left and right eyes to receive different images from each other and thus enabling the person's brain to perceive an object with depth by fusing the two different pieces of image information precisely as these are received through the retina.

3D image display apparatuses are generally classified as an eyeglasses type or a non-eyeglasses types. An eyeglasses type apparatus may be a color filter apparatus which filters an image using a color having complementary color filters; a polarizing filter type apparatus which divides an image into left- and right-eye images using a shading effect caused by combining orthogonal polarized light elements; and a shutter glasses type apparatus which alternately blocks a left eye and a right eye in response to a synchronization signal that projects a left-eye image signal and a right-eye image signal onto a screen.

However, it is necessary for a viewer to wear 3D glasses to watch view an image from an eyeglasses type apparatus.

A disposable battery may be inserted in the 3D glasses to power the 3D glasses, or the 3D glasses may be charged using a separate charger. In the case of a disposable battery, user convenience declines due to the need for frequent battery replacement and battery costs. Using a separate charger also may not be an ideal option, particularly considering the fact that a user has to purchase a separate charger to charge the 3D glasses.

Therefore, an improvement is desired, which enables a user to charge the 3D glasses more conveniently.

Exemplary embodiments overcome the above disadvantages and other disadvantages not described above. Also, the embodiments are not required to overcome the disadvantages described above, and an exemplary embodiment of the present inventive concept may not overcome any of the problems described above.

According to an aspect of an exemplary embodiment, there is provided 3D glasses operating in association with a 3D display apparatus, the 3D glasses including an interface unit, adapted to connect to the 3D display apparatus, through which power can be transmitted to the 3D glasses, a battery unit which powers the 3D glasses, and a charging unit, connected to the interface unit and the battery unit, which receives power input from the interface unit and charges the battery unit. The interface unit may be a universal serial bus (USB) interface unit.

According to an aspect of another exemplary embodiment, there is provided a 3D display apparatus operating in association with 3D glasses, the 3D display apparatus including a power supply unit which supplies power, and an interface unit which is adapted to connect to the 3D glasses, and through which a charging voltage can be transmitted to the 3D glasses.

The interface unit may preferably be a USB interface unit.

According to an aspect of another exemplary embodiment, there is provided a 3D display apparatus operating in association with a plurality of 3D glasses, the 3D display apparatus including a power supply unit which supplies power, and a plurality of interface units, each of which is adapted to connect to one of the plurality of 3D glasses, and through each of which a charging voltage can be transmitted to the respective connected 3D glasses.

The plurality of interface units may preferably be a USB interface unit.

According to an aspect of another exemplary embodiment, there is provided a system for charging 3D glasses operating in association with a 3D display apparatus, the system including a 3D display apparatus, a USB cable, and at least one pair of 3D glasses connected to the 3D display apparatus through the USB cable, wherein the 3D glasses can be charged by a charging voltage supplied from the 3D display apparatus through the USB cable.

According to an aspect of another exemplary embodiment, there is provided a system for charging 3D glasses, the system including a 3D display apparatus and 3D glasses, in which the 3D display apparatus wirelessly supplies a voltage to the 3D glasses, thus charging the 3D glasses in a contactless charging manner.

The 3D display apparatus may include a primary coil, and the 3D glasses may include a secondary coil coupled magnetically to the primary coil of the 3D display apparatus to generate an induced electromotive force. The 3D glasses further includes a rectifier which rectifies the generated induced electromotive force into a direct current, and a voltage adjusting unit which adjusts the voltage of the rectified direct current to a constant voltage level.

The secondary coil may be located in a frame of the 3D glasses.

The primary coil may be located in one of a front portion, a rear portion, a side portion, and a lower portion of the 3D display apparatus.

The 3D display apparatus may additionally include a 3D glasses holder disposed adjacent to the primary coil so that the 3D glasses can be laid thereon. The 3D glasses are chargeable with the induced electromotive force which is generated by a magnetic coupling between the primary coil and the secondary coil, when the 3D glasses are disposed in the 3D glasses holder.

The primary coil may be located in a lower portion of the 3D display apparatus, and the 3D glasses are wirelessly chargeable with the induced electromotive force when the 3D glasses are within a predetermined distance of the primary coil.

The primary coil may be located in a support supporting the 3D display apparatus, and the 3D glasses are wirelessly chargeable with the induced electromotive force when the 3D glasses are within a predetermined distance of the primary coil.

According to an aspect of another exemplary embodiment, there is provided a system for charging 3D glasses operating in association with a 3D display apparatus, the system including 3D glasses, and a cradle which is connected to the 3D display apparatus, and which receives a voltage from the 3D display apparatus and wirelessly supplies the voltage to the 3D glasses, thus charging the 3D glasses in a contactless charging manner.

The cradle may include a primary coil magnetically coupled to a secondary coil included in the 3D glasses to generate an induced electromotive force.

The cradle may be formed in a configuration suitable to hold the 3D glasses therein, in which if the 3D glasses are held in the cradle, the 3D glasses are charged using a voltage supplied wirelessly from the cradle.

The cradle may additionally include a USB interface unit which receives a voltage from the 3D display apparatus, in which the 3D glasses are charged wirelessly with a voltage supplied via the USB interface unit.

The above and/or other aspects will be more apparent by describing certain exemplary embodiments with reference to the accompanying drawings, in which:
FIG. 1 illustrates a system for charging 3D glasses according to an exemplary embodiment;
FIG. 2 is a block diagram of a 3D TV implementing a USB charging method according to an exemplary embodiment;
FIG. 3 is a block diagram of 3D glasses implementing a USB charging method according to an exemplary embodiment;
FIG. 4 illustrates a system for charging 3D glasses implementing a contactless charging method according to an exemplary embodiment;
FIG. 5 is a block diagram of a 3D TV implementing a contactless charging method according to an exemplary embodiment;
FIG. 6 is a block diagram of 3D glasses implementing a contactless charging method according to an exemplary embodiment;
FIG. 7 is a circuit diagram of a charging unit of 3D glasses implementing a contactless charging method according to an exemplary embodiment;
FIG. 8 illustrates a coil of 3D glasses implementing a contactless charging method according to an exemplary embodiment;
FIGS. 9A and 9B illustrate a structure of a system for charging 3D glasses implementing a contactless charging method according to an exemplary embodiment; and
FIGS. 10A and 10B illustrate a structure of a system for charging 3D glasses including a charging cradle according to an exemplary embodiment.

Certain exemplary embodiments will now be described in greater detail with reference to the accompanying drawings.

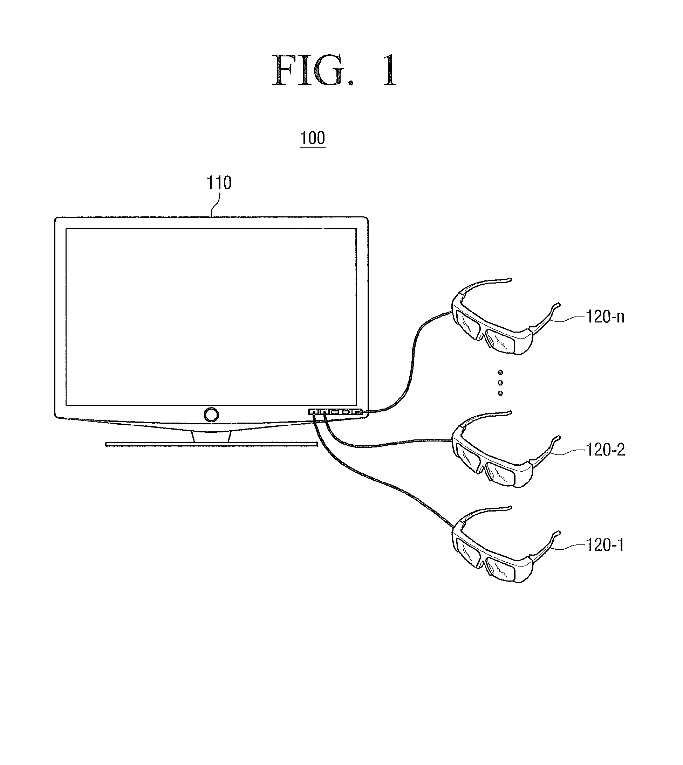

FIG. 1 illustrates a charging system 100 of 3D glasses 120 according to an exemplary embodiment. As illustrated, the wireless charging system of the 3D glasses 120 may include a 3D television (TV) 100 which supplies power to charge the 3D glasses 120, and a plurality of 3D glasses 120-1, 120-2, ..., 120-n which are charged by the power supplied from the 3D TV 100.

The 3D TV 110 is a display apparatus, which receives a 3D image from a photographing device such as a camera, or from a broadcasting station where an image captured through a camera is edited and/or processed and transmitted, processes the received 3D image and displays the result. Particularly, the 3D TV 110 may process left-eye images and right-eye images with reference to the 3D image format, and cause the processed left- and right-eye images to be time-divided and displayed alternately. The 3D TV 110 may additionally generate a synchronous signal in sync with the timing with which the time-divide left- and right-eye images are displayed, and transmits the synchronous signal to the 3D glasses 120.

The 3D glasses 120 may open and close the left eye portion (left glass) and the right eye portion (right glass) alternately in accordance with the synchronous signal received from the 3D TV, allowing a user to view the left-eye images and the right-eye images through his left eye and right eye, respectively.

In a system for charging 3D glasses according to an exemplary embodiment, the 3D TV 110 may be connected to a plurality of 3D glasses 120-1, 120-2, ..., 120-n via a USB cable. Through the USB cable, the 3D TV 110 may supply power to the plurality of 3D glasses 120-1, 120-2, ..., 120-n, and the plurality of 3D glasses 120-1, 120-2, ..., 120-n may be charged by the supplied power.

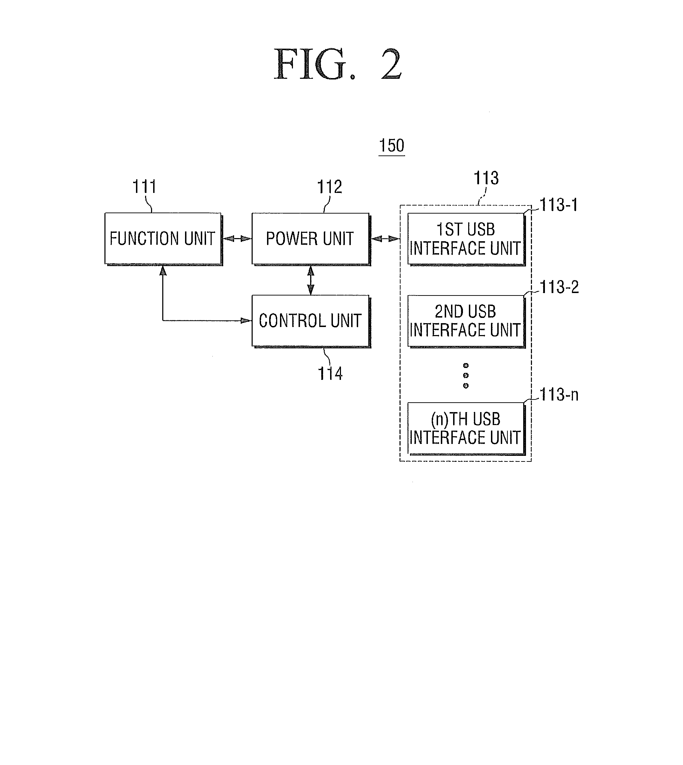

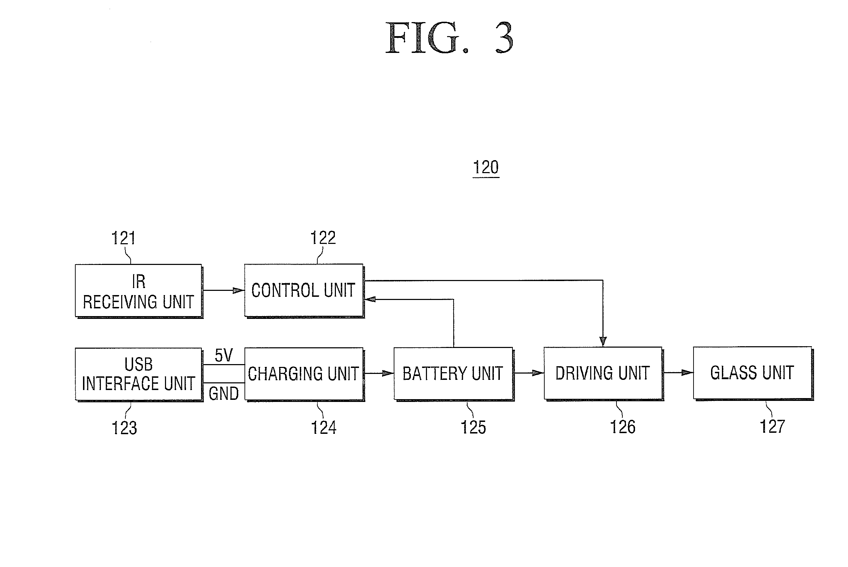

Hereinbelow, a method of charging the 3D glasses 120 using a USB cable will be explained in greater detail, mainly with reference to FIGS. 2 and 3. FIG. 2 is a block diagram of the 3D TV 110 according to an exemplary embodiment. Referring to FIG. 2, the 3D TV 110 according to an exemplary embodiment may include a function unit 111, a power unit 112, a plurality of USB interfaces 113-1, 113-2, ..., 113-N, and a control unit 114.

The function unit 111 may carry out general functions of the 3D TV 110. Specifically, the function unit 111 may receive 3D broadcast content from the outside and reproduce the received 3D broadcast content. In particular, the function unit 111 may carry out functions such as tuning of a broadcast signal from a broadcast server such as a terrestrial broadcast, a cable or a satellite, decoding of the tuned broadcast signal and correcting of errors. The function unit 111 may additionally separate the decoded broadcast signal into video data, audio data and other additional data, and decode the respective data. If the received data is a 3D image, the function unit 111 may also separate the 3D image video data into left-eye images and right-eye images, and process the separate images respectively. The function unit 111 may then output the processed left- and right-eye images alternately, while outputting the audio data in sync with the images.

The power unit 112 may provide the power to the respective components of the 3D TV 110 under the control of the control unit 114 which will be explained in detail below. Particularly, in order to charge the 3D glasses 120, the power unit 112 may supply the power to the USB interface unit 113 which will be explained below. Typically, 220V AC power is supplied to a home 3D TV 110, and the power unit 112 may convert the power into 5V direct current (DC) power to charge the 3D glasses 120 through the USB cable.

The USB interface unit 113 may be connected to an external terminal device through the USB cable to supply power or exchange data. Particularly, the USB interface unit 113 may be connected to the 3D glasses 120 to supply a charging voltage to the 3D glasses 120. In such a situation, the USB interface unit 113 may include a plurality of USB interface units 113-1, 113-2, ..., 113-n to charge the plurality of 3D glasses 120-1, 120-2, ..., 120-n.

Specifically, a USB connection may include a pair of power terminals 5V, GND, and a pair of data terminals D+, D-. Charging between the 3D TV 110 and the 3D glasses 120 through the USB cable may be achieved by the pair of power terminals 5V, GND. That is, if the 3D glasses 120 are connected to the 3D TV 110 through the USB cable, the 3D TV 110 supplies power to the 3D glasses 120 through the 5V terminal.

The control unit 114 may control the overall operation of the 3D TV 110 according to a user command transmitted from a user operating unit (not illustrated).

Particularly, the control unit 114 may control the power unit 112 and a plurality of USB interface units 113-1, 113-2, ..., 113-n so that the 3D TV 110 charges the 3D glasses 120.

Additionally, if the 3D TV 110 is currently charging the 3D glasses 120 through the USB cable, the control 114 may control so that a graphical user interface (GUI) appears, indicating the current status in which the 3D glasses 120 are charged.

Although the power is supplied through the USB in the example explained above with reference to FIG. 2, this is only for illustrative purposes. Accordingly, other types of interfaces may be implemented to supply power.

FIG. 3 is a block diagram of the 3D glasses 120 according to an exemplary embodiment. Referring to FIG. 3, the 3D glasses 120 may include an infrared (IR) receiving unit 121, a control unit 122, a USB interface unit 123, a charging unit 124, a battery unit 125, a driving unit 126, and a glass unit 127.

The IR receiving unit 121 may receive a synchronous signal regarding a 3D image from a glasses signal transmitting and receiving unit (not illustrated) of the 3D TV 120. Particularly, the glasses signal transmitting and receiving unit may irradiate a synchronous signal using the infrared ray with linearity, and the IR receiving unit 121 may receive a synchronous signal from the irradiated infrared ray. By way of example, the glasses signal transmitting and receiving unit may transmit an infrared ray with frequency of 60 Hz to the IR receiving unit 121.

The USB interface unit 123 may be connected to the USB interface unit 113 of the 3D TV 110 explained above, to charge the 3D glasses 120.

The USB interface unit 123 of the 3D glasses 120 may be connected to the 3D TV 110 and the pair of power terminals 5V, GND through the USB cable. The USB interface unit 123 may receive a charge voltage from the 3D TV 110 through the 5V terminal of the power terminals, and supply the received charge voltage to the charging unit 124.

The charging unit 124 may rectify or transform the charge voltage received from the USB interface unit 123 to a form suitable to charge the battery unit 125 which will be explained below.

The battery unit 125 may supply power to the components of the 3D glasses 120 under the control of the control unit 122. Particularly, the battery unit 125 may supply power to the 3D glasses 120 using the power charged in the manner explained above. The battery unit 125 may be a rechargeable battery or a super capacitor battery.

The driving unit 126 may generate a driving signal based on a control signal received from the control unit 122. Specifically, since the glass unit 127 includes the left glass and the right glass, the driving unit 126 may generate a left glass driving signal to drive the left glass and a right glass driving signal to drive the right glass respectively, and transmit the generated left and right glass driving signals to the left and right glasses, respectively.

The glass unit 127, including the left glass and the right glass as mentioned above, may open and close the respective left and right glasses in accordance with the driving signals received from the driving unit 126.

The control unit 122 may control the overall operations of the 3D glasses 120. Specifically, the control unit 122 may generate a control signal based on an output signal received from the IR receiving unit 121, and transmit the generated control signal to the driving unit 126 to control the driving unit 126 accordingly.

The control unit 122 may additionally control the battery unit 125 to supply the power charged in the manner explained above to the components of the 3D glasses 120.

Since the 3D TV 110 may charge the plurality of 3D glasses 120-1, 120-2, ..., 120-n in the manner explained above, there is no need for a separate charger, and the plurality of 3D glasses 120-1, 120-2, ..., 120-n can be charged concurrently.

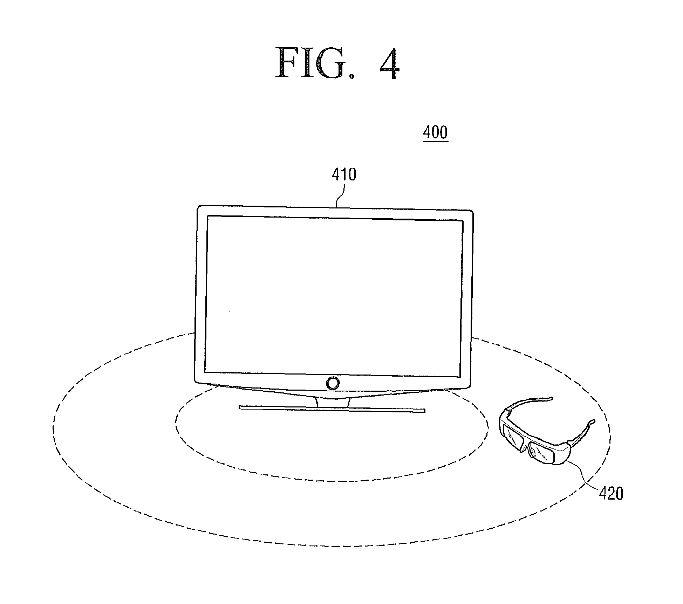

A method of wirelessly charging 3D glasses using a contactless charging method according to an exemplary embodiment will be explained below, with reference to FIGS. 4 to 10B.

FIG. 4 illustrates a system for charging 3D glasses implementing a contactless charging method according to an exemplary embodiment. As illustrated in FIG. 4, the system for charging 3D glasses may include a 3D TV 410 and 3D glasses 420.

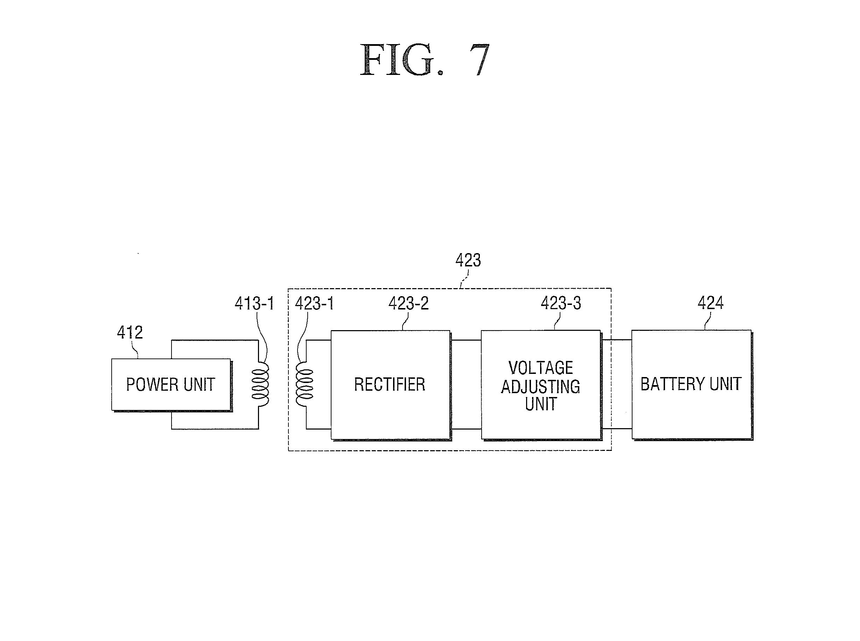

If the 3D glasses 420 are within a predetermined distance of the 3D TV 410, the 3D glasses 420 may be charged by the power supplied from the 3D TV 410 in a contactless charging manner. The term 'contactless charging method (manner)' relates to charging a battery using electromagnetic induction generated between two parallel metal coils. The contactless charging will be explained in greater detail below with reference to FIG. 7.

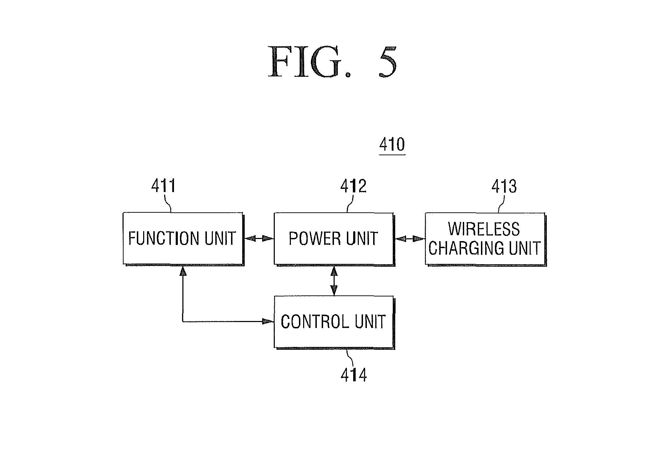

FIG. 5 is a block diagram of the 3D TV 410 implementing the contactless charging method according to an exemplary embodiment. Referring to FIG. 5, the 3D TV 410 may include a function unit 411, a power unit 412, a wireless charging unit 413, and a control unit 414.

The function unit 411, the power unit 412, and the control unit 414 of FIG. 5 will not be explained in detail below, as these are analogous to the function unit 111, the power unit 112, and the control unit 114 explained above with reference to FIG. 2.

The wireless charging unit 413 may wirelessly charge the 3D glasses 420 using the power supplied from the power unit 412. Since the wireless charging unit 413 may implement contactless charging, the wireless charging unit 413 may include a primary coil (transmitting coil) for electromagnetic induction. The wireless charging unit 413 may apply the power supplied from the power unit 412 to the primary coil, and supply the power of the 3D TV 410 to the 3D glasses 420 using the electromagnetic induction.

The primary coil of the wireless charging unit 413 may be located in at least one of a front surface, a rear surface, and a side surface of the 3D TV 410. Specifically, if a 3D glasses holder in which the 3D glasses 420 can be laid thereon is provided, the primary coil may be located in the 3D glasses holder.

Alternatively, the primary coil may be located in a bottom side or a support of the 3D TV 410. If the 3D glasses 420 are placed on the bottom side of the 3D TV 410 where there is the primary coil, the 3D glasses 420 are charged in a contactless charging manner.

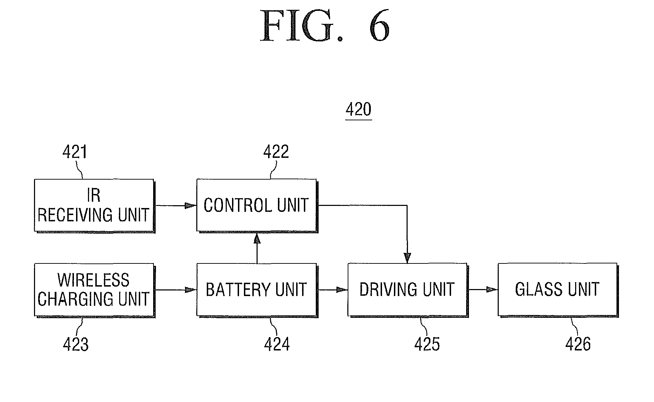

FIG. 6 is a block diagram of the 3D glasses 420 according to an exemplary embodiment. As illustrated in FIG. 6, the 3D glasses 420 may include an infrared ray (IR) receiving unit 421, a control unit 422, a wireless charging unit 423, a battery unit 424, a driving unit 425, and a glass unit 426.

The IR receiving unit 421, the control unit 422, the battery unit 424, the driving unit 425, and the glass unit 426 of FIG. 6 will not be explained in detail below, as these are analogous to the IR receiving unit 121, the control unit 122, the battery unit 125, the driving unit 126, and the glass unit 127 explained above with reference to FIG. 3.

An electric current is generated due to electromagnetic induction generated between the primary coil of the wireless charging unit 413 of the 3D TV 410 and a secondary coil included in the wireless charging unit 423 of the 3D glasses 420, and the wireless charging unit 423 charges the battery unit 424 using the generated electric current.

The wireless charging unit 423 will be explained in greater detail below with reference to FIG. 7. FIG. 7 schematically illustrates the wireless charging unit 423 according to an exemplary embodiment.

As illustrated in FIG. 7, the 3D TV 410 may include the power unit 412, and the primary coil 413-1. The power unit 412 supplies a sine wave of power to the primary coil 413-1 so that the electricity flows through the primary coil 413-1. As the electricity flows through the primary coil 413-1, a magnetic field is generated around the primary coil 413-1.

The wireless charging unit 423 of the 3D glasses 420, which is provided for the wireless charging with the 3D TV 410, may include a secondary coil 423-1, a rectifier 423-2, and a voltage adjusting unit 423-3.

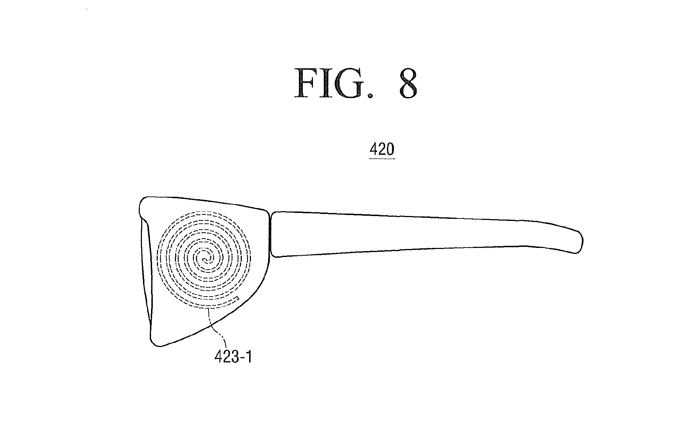

If the secondary coil 423-1 is placed close to the magnetic field generated from the primary coil 413-1 explained above, electricity flows through the second coil 423-1 due to electromagnetic induction. In other words, the magnetic coupling between the primary and the secondary coils 413-1, 423-1 causes induced electromotive force to be generated in the secondary coil 423-1. In such a situation, the secondary coil 423-1 may be located in the frame of the 3D glasses 420 as illustrated in FIG. 8.

The generated induced electromotive force may be rectified to DC by the rectifier 423-1. The rectifier 423-1 may include four bridge diode-type diodes, and a capacitor for filtering. Of course, other forms of rectifying circuits beside the rectifier 423-1 explained above may be implemented according to an exemplary embodiment. Additionally, the voltage adjusting unit 423-3 may adjust the rectified DC voltage to a constant voltage level.

The DC voltage, which is adjusted by the processes explained above into a constant voltage level, is supplied to the battery unit 424. Accordingly, the battery unit 424 may supply power to the components of the 3D glasses 120 using the power charged in the manner explained above.

Since it is possible to charge the 3D glasses 420 wirelessly, i.e., without requiring a cable, user convenience in charging the 3D glasses 420 increases significantly.

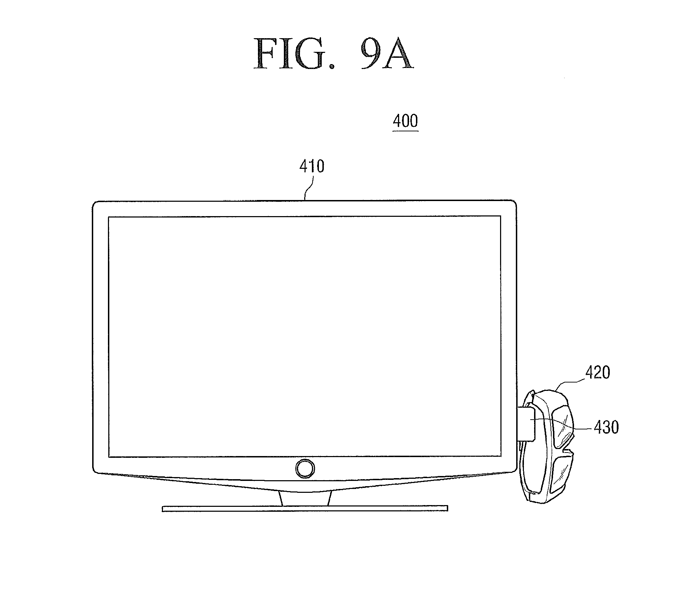

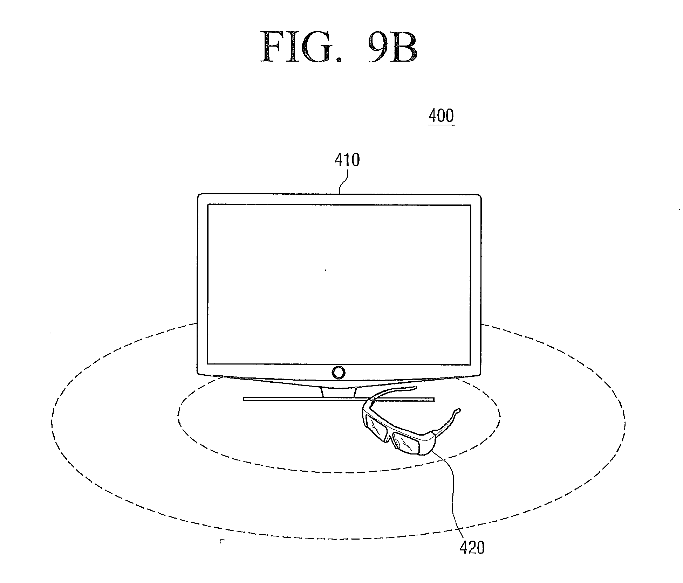

FIGS. 9A and 9B illustrate the structure of the 3D glasses implementing a contactless charging method according to an exemplary embodiment.

Specifically, FIG. 9A illustrates the 3D glasses 420 being charged while the 3D glasses 420 are laid on the 3D glasses holder 430 on a predetermined portion of the 3D TV 410. Referring to FIG. 9A, the system for charging 3D glasses may include the 3D TV 410, the 3D glasses 420, and the 3D glasses holder 430. The 3D glasses holder 430 may be located close to a right lower edge of the 3D TV 410. Accordingly, if the 3D glasses 420 are laid on the 3D glasses holder 430, the primary coil 413-1 and the secondary coil 423-1 are placed close to each other, and accordingly, the electromagnetic induction is generated. Due to the electromagnetic induction, the 3D glasses 420 are chargeable with the electricity of the 3D TV 410.

Although the 3D glasses holder 430 and the primary coil 413-1 are explained above as being located on the lower portion of the right side of the 3D TV 410, this is only for illustrative purposes. Accordingly, the location of the 3D glass holder 430 and the primary coil 413-1 may be changed to, for example, an upper right portion, a lower left portion, an upper left portion, or a rear portion.

FIG. 9B illustrates the 3D glasses 420 being charged as the 3D glasses 420 are laid on a lower portion of the 3D TV 410. Referring to FIG. 9B, the system for charging 3D glasses may include the 3D TV 410 and the 3D glasses 420.

The 3D glasses 420 may be placed within a predetermined distance of a lower end of the 3D TV 410. The term 'predetermined distance' relates to a distance within which the electromagnetic induction can be generated between the primary coil 413-1 of the 3D TV 410 and the secondary coil 423-1 of the 3D glasses 420. The primary coil 413-1 may be located in a lower surface of the 3D TV 410, or on a support 460 supporting the 3D TV 410. If the 3D glasses 420 are placed within the predetermined distance of the support 460 of the 3D TV 410 or the lower surface of the 3D TV 410, the electromagnetic induction is generated as the primary coil 413-1 of the 3D TV 410 and the secondary coil 423-1 of the 3D glasses 420 are placed close to each other. As a result, due to the electromagnetic induction, it is possible to charge the 3D glasses 420 using the power of the 3D TV 410.

Since the 3D glasses 420 are chargeable contactlessly, there is no need for a separate cable or charger to charge the 3D glasses 420, and user can charge the 3D glasses 420 more conveniently and easily.

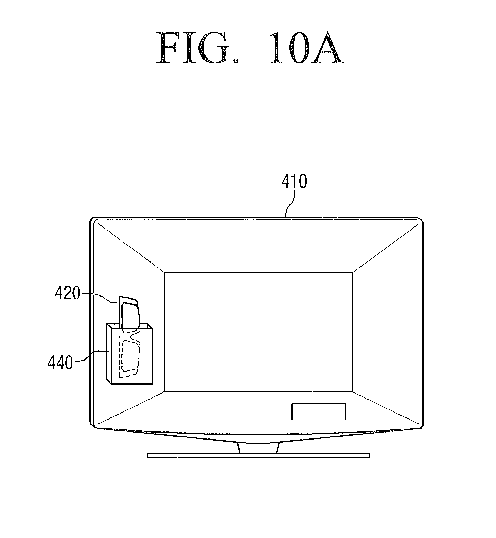

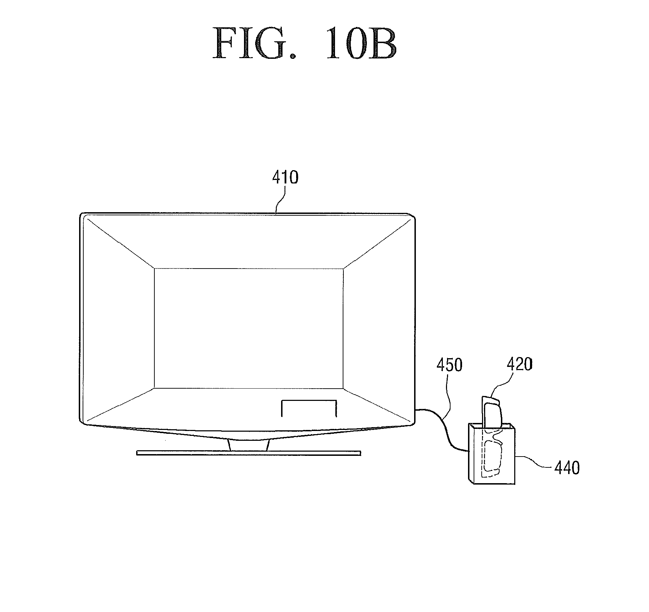

The system for charging 3D glasses implementing a contactless charging method using a charging cradle 440 according to an exemplary embodiment will be explained below with reference to FIGS. 10A and 10B.

In contactless charging using the charging cradle 440, the power unit 412 and the primary coil 413-1 explained above with reference to FIG. 7 may be located in the charging cradle 440. Accordingly, due to the electromagnetic induction generated between the primary coil 413-1 of the charging cradle 440 and the secondary coil 423-1 of the 3D glasses 420, the 3D glasses 420 are charged. The manner of charging the 3D glasses 420 is explained above with reference to FIG. 7, and therefore, will not be repeated below.

FIG. 10A illustrates the structure of a system for charging 3D glasses which has the charging cradle 440 according to an exemplary embodiment. The system for charging 3D glasses according to this embodiment may include the 3D TV 410, the 3D glasses 420, and the charging cradle 440. The charging cradle 440 may be attached to the rear portion of the 3D TV 410 as illustrated in FIG. 10A. Additionally, the charging cradle 440 may be connected electrically to the 3D TV 410 to charge the 3D glasses 420 with the power supplied from the 3D TV 410.

FIG. 10B illustrates the structure of a system for charging 3D glasses which has the charging cradle 440 according to an exemplary embodiment. In this embodiment, the system for charging 3D glasses may include the 3D TV 410, the 3D glasses 420, the charging cradle 440, and a cable 450. As illustrated in FIG. 10B, the charging cradle 440 may be connected to the 3D TV 410 through the cable 450. Accordingly, the charging cradle 440 may charge the 3D glasses 420 with the power supplied from the 3D TV 410. The cable 450 may be implemented as a USB cable. Accordingly, the charging cradle 440 may include a USB interface unit (not illustrated) to connect the charging cradle 440 to the 3D TV 410 through the USB cable.

As explained above, the user is able to charge the 3D glasses 420 more easily, by simply laying the 3D glasses 420 in the charging cradle 440.

Although the 3D TV 110 is explained as an example of a 3D display apparatus in the exemplary embodiments explained above, this is only for illustrative purposes. Accordingly, the technical concept of what is described herein is equally applicable to any 3D display apparatus which is capable of displaying shutter glass type 3D images. By way of example, a 3D projection or 3D monitor may be implemented as an example of the 3D display apparatus.

As explained above, user convenience in charging the 3D glasses 120 increases because there is no need for a separate charging device.

The foregoing exemplary embodiments and advantages are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A system for charging three dimensional (3D) glasses, the system comprising:
a 3D display apparatus; and
3D glasses;
wherein the 3D display apparatus wirelessly supplies a voltage to the 3D glasses to charge the 3D glasses in a contactless charging manner.

2. The system of claim 1,
wherein the 3D display apparatus comprises a primary coil,
wherein the 3D glasses comprise a secondary coil coupled magnetically to the primary coil to generate an induced electromotive force; and
wherein the 3D glasses further comprise:
a rectifier which rectifies the generated induced electromotive force into a direct current; and
a voltage adjusting unit which adjusts the voltage of the rectified direct current to a constant voltage level.

3. The system of claim 2, wherein the secondary coil is located in a frame of the 3D glasses.

4. The system of claim 2, wherein the primary coil is located in one of a front portion, a rear portion, a side portion, and a lower portion of the 3D display apparatus.

5. The system of claim 4, wherein the 3D display apparatus further comprises a 3D glasses holder, disposed adjacent to the primary coil, and
wherein the 3D glasses are chargeable with the induced electromotive force generated by a magnetic coupling between the primary coil and the secondary coil, when disposed in the 3D glasses holder.

6. The system of claim 4, wherein the primary coil is located in a lower portion of the 3D display apparatus, and
the 3D glasses are charged with the induced electromotive force when the 3D glasses are within a predetermined distance of the primary coil.

7. The system of claim 4, wherein the primary coil is located in a support which supports the 3D display apparatus, and
the 3D glasses are charged with the induced electromotive force when the 3D glasses are within a predetermined distance of the primary coil.

8. The system of claim 1, further comprising
a cradle which is connected to the 3D display apparatus, and which receives a voltage from the 3D display apparatus and wirelessly supplies the voltage to the 3D glasses in a contactless charging manner.

9. The system of claim 8, wherein the cradle comprises a primary coil and the 3D glasses comprise a secondary coil, wherein the primary coil and the secondary coil are magnetically coupled to generate an induced electromotive force.

10. The system of claim 9, wherein the cradle is configured to support the 3D glasses therein, and
the 3D glasses are charged using the voltage supplied wirelessly from the cradle when the 3D glasses are supported by the cradle.

11. The system of any one of claims 8 to 10, wherein the cradle comprises a universal serial bus (USB) interface unit which receives the voltage from the 3D display apparatus, and
the 3D glasses are charged wirelessly with the voltage supplied via the USB interface unit.
